# EUROPEAN PATENT APPLICATION

(11) **EP 4 502 403 A1**
(43) Date of publication of application: **05.02.2025**
(21) Application number: 23189285.2
(22) Date of filing: 02.08.2023
(51) Int. Cl.: F16B 35/06, F16B 37/04, F16B 41/00, F16B 11/00, F16B 13/14

(54) **FASTENING ELEMENT WITH ADHESIVE AND METHODS FOR USING AND MANUFACTURING THE SAME**

(71) Applicant: Newfrey LLC, New Britain, CT 06053 (US)
(72) Inventor: GRAMSCH-KEMPKES, Sascha, 35394 Gießen (DE)
(74) Representative: SBD IPAdmin

(57) **Abstract**

Method for manufacturing a fastening element (10, 10'), method for using a fastening element (10, 10') and fastening element for gluing onto a workpiece (16), comprising:
- at least one fastening section (12, 12'), and
- a contact surface (14, 14') , wherein a permanent adhesive (24, 24') is applied to a first area (20) of the contact surface, and the contact surface also comprises a second area (22), different from the first area,
wherein
a fixation wax (26, 26') is applied on the second area (22), different from the first area and wherein an anti-tack coating (30) is applied to the fixation wax.

## Description

The present invention relates to a fastening element having pre-applied joining material, a method of producing the same and a method of using the same.

It is known, for example, in the technical field of joining fasteners to workpieces to weld metallic bolts to metallic workpieces. This method, known as "stud welding", is used, in particular, in the automotive industry in order to weld bolts to car body panels, wherein fixing clips made of plastic are fixed to connect to the bolts, to which fixing clips cables, wires etc. are fixed.

Due to the fact that composite materials that are able to be welded less well or are non-metallic are being increasingly used, for example, in car body construction, such as plastics, fibre composite components, etc., the adhesive bonding technique (or gluing technique or adhering technique) has been established as a joining method in car body panel construction in particular. Instead of welding the bolts or other fasteners to workpieces, they are adhesively bonded (or glued) to the workpiece.

Fastening elements of this kind comprising a fastening section and a contact surface are glued to bodywork parts or workpieces of an automobile, for instance. A second component to be fastened to the bodywork can subsequently be fastened to the fastening sections of the fastening elements.

The adhesive for holding the fastening element on the workpiece is usually applied to the contact surface of the fastening element in a fluid state. The fastening element is then placed onto the workpiece. It is necessary in this case for the fastening element to be held against the carrier component until the glue has hardened and is therefore providing its holding force. Depending on the accessibility of the fastening location for the fastening element and the materials to be used, under certain circumstances, additional measures are required to accelerate the hardening (for example UV radiation) or the fastening element must be held on the workpiece for a comparatively long time until the hardening is sufficiently advanced. Prolonged holding of this kind is time-consuming and undesirable. Holding the fastening element by mechanical means increases the assembly costs.

It is known notably from EP2802785A1 to use a fastening element comprising a contact glue for preliminarily holding the fastening element on a carrier component and a permanent glue for permanently holding the fastening element. The gluing forces of the contact glue are not sufficient to hold the fastening element on the carrier component securely during operation. This is the function of the permanent glue, which provides greater adhesive force than the contact glue after hardening. The adhesive forces of the contact glue are sufficient, however, to hold the fastening element securely in the prescribed position on the carrier component while the permanent glue hardens. However, a risk remains that the two different glue interferes with each other. Besides, the two glues (or also called adhesives) have to be applied on the fastening element on site, the fastening element cannot be transported with the glues applied.

Therefore, there is still a need to provide a fastening element to be glued on a workpiece which can be easily assembled, used and transported.

Accordingly, the present invention provides a fastening element according to claim 1. More particularly, the fastening element comprises at least one fastening section, and a contact surface possibly facing away from the at least one fastening section, wherein a permanent adhesive is applied to a first area of the contact surface, and the contact surface also comprises a second area, different from the first area, wherein a fixation wax is applied on the second area, different from the first area and wherein an anti-tack coating is applied to the fixation wax.

The fixation wax is a tacky wax, for instance a wax similar to the THOWAX STICK-ON-WACHS commercialized by YETI-DENTAL^{®}.

The permanent adhesive is a glue. The permanent adhesive is not a wax. It may be an epoxy resin adhesive, a polyurethane resin adhesive or an adhesive resin component comprising methacrylate monomers, amines and additional rubbers and toughening agents. The permanent adhesive may also be a structural adhesive, an adhesive for low-energy surfaces (polyurethane resin adhesive, polypropylene adhesive), a thermally and/or electrically conductive adhesive, a flexible adhesive and/or a FST (Fire, Smoke, and Toxicity) compliant adhesive. More generally, the permanent adhesive can be any sort of adhesive which is not cured with heat. In other words, the permanent adhesive can be any cold curing adhesive.

The fixation wax enables an immediate holding of the fastening element (an adhesive may need few seconds to develop the holding function). Besides, the wax is plastically deformable at ambient temperature and melt from a particular threshold temperature, and the wax generates cohesive strength. Therefore, the use of a fixation wax instead of a fixation adhesive or glue is particularly advantageous. The fixation wax gets coated with an anti-tack coating in order to eliminate the fixation wax' tack. The coating allows the fastening element with the fixation wax to be easily transported in bulks, preventing the fastening element to stick together.

In an embodiment, the contact surface comprises a recess and the fixation wax is arranged within the recess. The recess forms a buffer volume or a reservoir or a tank so that the fixation wax does not extend beyond the intended surface and does not contaminate the permanent adhesive. The bottom of the recess forms the second area.

In an embodiment, the recess is an annular recess, and the fixation wax is arranged in the annular recess. For instance, the contact surface may be annular. In an embodiment, the fastening element may be a glue nut.

In an alternative embodiment, the fastening section is a shaft extending along a longitudinal axis, and comprising a flange which extends transversely with respect to the shaft, wherein the contact surface is a top surface of the flange which faces away from the shaft, and wherein the recess is a circular recess centered on the flange. The fastening element is thus what we call a glue stud.

In an embodiment, the volume of the fixation wax is less than the interior volume of the recess. Thus, the fixation wax remains in the recess.

In an embodiment, the anti-tack coating is a resin or paint layer. It can be any kind of resin or paint layer. For instance, any spray paint can be used. In a particular embodiment a UV-curing paint or varnish or resin that can be dried quickly with UV light after spraying may be used.

In an embodiment, the anti-tack coating extends on the entire contact surface. In an alternative, a mask may be used to apply the anti-tack coating only on the fixation wax.

In an embodiment, the anti-tack coating is a glass-sphere or glass beads arranged above the fixation wax. The fixation wax gets coated with glass beads in order to eliminate the fixation wax' tack and to promote the contact surface's specific adhesion. More particularly a plurality of glass beads may cover (coat) the fixation wax. Each glass bead has for instance a diameter up to 0.3mm.

In an embodiment, the anti-tack coating is a silicon or silica layer (SiOx, e.g., Pyrosil^{®}) or a polymer layer. An anti-tack coating may also be applied via plasma polymerization.

In an embodiment, the permanent adhesive surrounds the fixation wax. Thus, the fixation wax is arranged inside the permanent adhesive and the middle or center of the contact surface is first fixed and then the permanent adhesive can permanently secure the fastening element near the edge of the contact surface.

The present disclosure is also directed to a method for fastening a fastening element with a workpiece comprising the steps of:
- providing a fastening element as described above,
- providing a workpiece
- arranging the contact surface of the fastening element facing the workpiece
- pushing the fastening element against the workpiece such that the anti-tack coating cracks and the fixation wax gets into contact with the surface of the workpiece for preliminarily holding the fastening element on the workpiece, while the permanent adhesive for permanently holding the fastening element on the workpiece becomes squeezed.
The fastening element is thus directly preliminary held onto the workpiece with the fixation wax which comes into contact with the workpiece after being squeezed to the workpiece. Thus, no further step is necessary for realizing the preliminary holding.

The present disclosure is finally directed to a method for manufacturing a fastener, comprising the steps of:
- providing an element having at least one fastening section and a contact surface facing away from the at least one fastening section,
- applying a fixation wax to a second area of the contact surface,
- coating the fixation wax with an anti-tack coating,
- applying a permanent adhesive to a first area of the contact surface, the first area being different that the second area.

The manufacture is easily realized and the element with the fixation wax and the coating can easily be transported before the application of the permanent adhesive.

In an embodiment, the contact surface comprises one recess and the fixation wax is applied within the recess. Thus, the fixation wax remains within the limits of the recess and does not contaminate other areas of the contact surface.

In an embodiment, the permanent adhesive is automatically applied by a device after the application of the fixation wax and the anti-tack coating.

A specific embodiment of the present invention will now be described, by way of example only and with reference to the accompanying drawings, of which:
Fig. 1 shows a perspective view of a fastening element according to a first embodiment comprising a shaft and a flange with a contact surface, a permanent adhesive being provided on a first area of the contact surface and a fixation wax being provided on a second area of the contact surface;
Fig. 2A shows a side view of a fastening element according to a second embodiment, the fastening element being in the form of a nut with a contact surface comprising a permanent adhesive being provided on a first area of the contact surface and a fixation wax being provided on a second area of the contact surface;
Fig. 2B shows a perspective view of the fastening element of Fig. 2A, the permanent adhesive not being illustrated;
Fig. 3A and Fig. 3B schematically show a device for applying permanent adhesive to the contact surface of the fastening element;
Fig. 4 schematically shows a device for joining the fastening element to a workpiece.

Unless otherwise indicated, the same reference numbers in the figures refer to identical or similar objects.

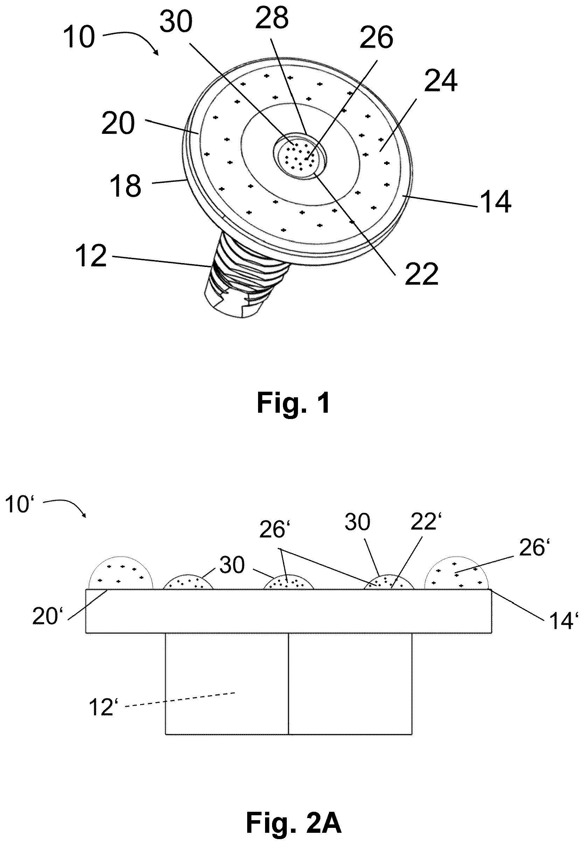

Fig. 1 shows a fastening element 10 comprising a fastening section and a contact surface. The fastening section 12 is a shaft extending along a longitudinal axis X. The shaft can for instance be a threaded shaft. The shaft is adapted to be connected to a component (not shown) to reliably join a workpiece 16 to the component. The fastening element 10 of Fig. 1 further comprises a flange 18 formed on and extending radially to an end of the shaft. The flange 18 can be a circular flange with a flange diameter. The flange 18 is radially delimited by an outer edge and comprises a top surface which forms the contact surface 14. The fastening element 10 is a stud (or glue stud).

The contact surface 14 comprises a first area 20 and a second area 22, different from the first area 20.

The first area 20 is destined to receive a permanent adhesive 24. Two components systems and moisture-curing one-component systems with medium or high viscosity may be used as permanent adhesives 24. The fastening element 10 is thus fixed solely by the tackiness and toughness of the uncrosslinked adhesive mass alone. A permanently plastic medium to high viscosity sealing compound could also be used, but this could lead to contamination of the production environment. The permanent adhesive 24 is for instance an epoxy resin adhesive, a polyurethane resin adhesive or an adhesive resin component comprising methacrylate monomers, amines and additional rubbers and toughening agents. The permanent adhesive 24 may also be an adhesive for low-energy surfaces (polyurethane resin adhesive, polypropylene adhesive), a thermally and/or electrically conductive adhesive, a flexible adhesive and/or a FST (Fire, Smoke, and Toxicity) compliant adhesive. More generally, the permanent adhesive may be any cold curing adhesive.

The first area 20 is for instance annular and the permanent adhesive 24 is arranged in the form of an annular bead or annular bulge. The first area 20 is flat. The first area 20 extends for instance substantially in the vicinity of the edge of the flange.

The second area 22 is destined to receive a fixation wax 26. The fixation was 26 is a tacky wax. Tacky wax is a wax and therefore easily plastically deformable at ambient temperature but unlike normal wax it has a tacky surface in its solid state. The fixation wax 26 may for instance be a wax similar to the THOWAX STICK-ON-WACHS commercialized by YETI-DENTAL^{®}. The fixation wax has sufficient adhesive forces to hold the fastening element 10 on the workpiece 26 while the permanent adhesive 24 hardens. The second area 22 is, as visible in Fig. 1 in the middle of the flange 18. A recess 28 is provided in the middle of the contact section or flange 18 and the fixation wax 26 is arranged inside the recess 28. In other words, the bottom of the recess 28 forms the second area 22. The fixation wax 26 may have the shape of a drop extending within the recess 28. The volume of the fixation wax for instance is less than the volume of the recess 28. However, the drop protrudes from the recess 28, such that a portion of the fixation wax 26 is above the plane formed by the first area 20. More particularly, the fixation wax 26 protrudes from the plane by at least 0.3 millimetres. In any case, the fixation wax 26 is higher than the squeezed permanent adhesive 24 (as better described below).

The first area 20 thus surrounds the second area 22. Thus, the permanent adhesive 24 is arranged around the fixation wax 26.

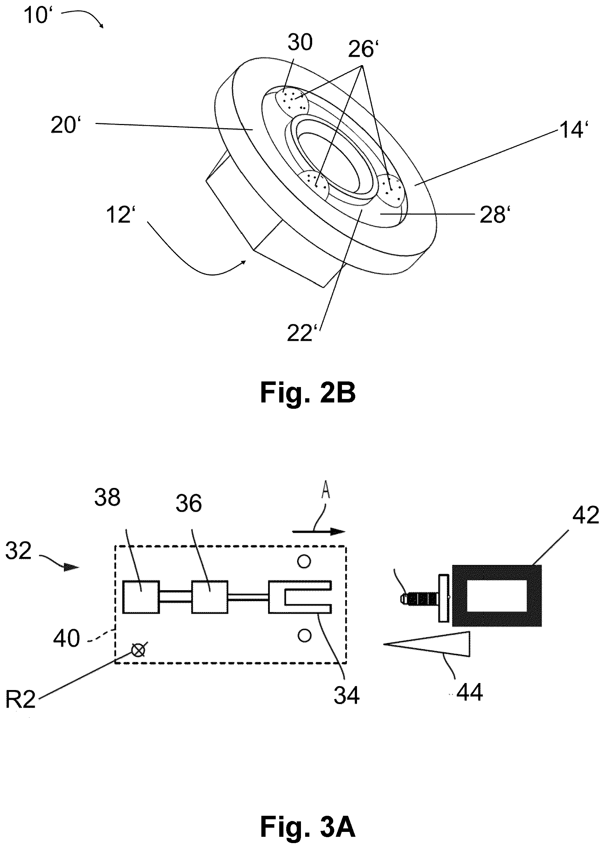

Fig. 2A and Fig. 2B show a second embodiment of a fastening element 10' according to the invention. The fastening element 10' comprises a fastening section 12' in the form of a hole (for instance a threaded hole). For instance the fastening element 10' comprises a shank with a hole (notably a through hole). The fastening element 10' is for example a nut or glue nut. The fastening element can also be a bushing (with a non-threaded hole), a spacer, a retainer, ...The contact surface 14' is annular and extends around the hole.

The contact surface 14' comprises the first area 20' surrounding the second area 22'. Both first and second area 20', 22' are annular, the second area 22' being arranged inside the first area 20'.

As mentioned above, the first area 20' is destined to receive the permanent adhesive 24' and the second area 22' is destined to receive the fixation wax 26'. The first area 20' is similar to the first area 20 of the first embodiment. The second area 22' is formed by the bottom of an annular groove or annular recess 28'. The fixation wax 26' is arranged within the annular recess 28'. More particularly, as better visible in Fig. 2B, a plurality of fixation wax drops are arranged within the annular recess 28'. For instance two or more fixation wax drops are arranged within the annular recess 28'. The volume of the drops is less than the volume of the annular recess. However, the drops all protrude from the recess 28', such that a portion of the fixation wax is above the plane formed by the first area 20'. More particularly, the fixation wax 26' protrudes from the plane by at least 0.3 millimetres.

In the first and second embodiment, the fixation wax 26, 26' is coated with an anti-tack coating 30, such that the fixation wax' tack is not effective during transport or manipulation of the fastening element 10, 10' provided with the fixation wax (but without the permanent adhesive). In an embodiment, only the fixation wax 26, 26' is coated with the anti-tack coating 30. In another embodiment, the entire contact surface 14, 14' may be coated, provided that the anti-tack coating 30 does not affect the performance of the permanent adhesive 24, 24'.

The anti-tack coating 30 is for instance a layer of paint applied only above the fixation wax 26, 26'. In order to apply the paint or resin layer only on the fixation wax 26, 26' (in other words in order to cover only the fixation wax 26, 26'and no other portion of the contact surface 14, 14'), a mask may be positioned on the contact surface such that only the fixation wax 26, 26' is visible (the mask covering the rest of the contact surface and having hole(s) only where the fixation wax is applied). The paint or resin or varnish is applied and to the contact surface covered with the mask and then the mask is removed. In such way, only the fixation wax 26, 26' is coated. Varnishes are generally suitable for this purpose and in particular UV-curing varnishes that dry accelerated under UV light so that the fastening element with fixation wax and anti-tack coating (but without the permanent adhesive) can be packaged after just a few minutes.

The paint, resin or varnish layer may also alternatively be applied on the entire contact surface 14, 14'.

The anti-tack coating 30 may also be a thin metal layer (as known in the metallization of plastics) applied via physical vapor deposition process.

Glass beads may also be used as an anti-tack coating 30. The glass beads are provided on the fixation wax only. The fastening element 10, 10' with the fixation wax 26, 26' (but without the permanent adhesive 24, 24') can be dipped into a bath of glass beads (like those used in adhesives as spacers). The glass beads adhere to the fixation wax (or sticky wax) 26, 26' and make the surface dry to touch. The remaining glass beads then fall off the fastening element when the fastening element is removed from the bath.

Alternatively, the glass beads can be trickled onto the fastening element 10, 10' from above or sprayed on with low pressure, similar to glass bead blasting. This method however carries the risk of glass beads adhering to unwanted areas and contaminating the packaging and later setting equipment.

A glass sphere may also be provided to coat the fixation wax 26, 26'.

The anti-tack coating 30 may also be produced by powdering with a filler. A sol-gel process, PVD (physical vapour deposition), CVD (chemical vapour deposition), thermal spraying or cold gas spraying can likewise be provided for the anti-tack coating.

In another possible embodiment, the anti-tack coating 30 may be applied by a flame treatment with a silicate oxide (SiOx, e.g. Pyrosil^{®}). The anti-tack coating 30 is then a silicate layer. A burner flame is preferably guided quickly over the fixation wax. A silicate (or silica) layer only a few nanometres thick but dense, for example, is deposited on the fixation wax. As an extremely short exposure to the coating flame is sufficient, only a moderate temperature rise is to be expected.

In yet another embodiment, a thin polymer layer could be deposited onto the fixation wax by means of plasma flame or plasma polymerisation to form the anti-tack coating 30. This method is a method very similar to the Pyrosil^{®} flame method, with even lower thermal stress.

The fastening element 10, 10' is realized as follows.

In a first step, an element comprising a fastening section 12, 12' and a contact surface 14, 14' is provided. The fixation wax 26, 26' is applied on the second area 22, 22' of the contact surface 14, 14'. For instance, a liquid drop (or several drops, as in the second embodiment) of heated fixation wax 26, 26' is applied to the second area 22, 22'. The fixation wax 26, 26' get then coated with the anti-tack coating 30, as disclosed above.

Once the element 10, 10' with the fixation wax 26, 26' and its coating 30 has been produced, it can be transported and delivered to the place where the assembly with a workpiece 16 will take place.

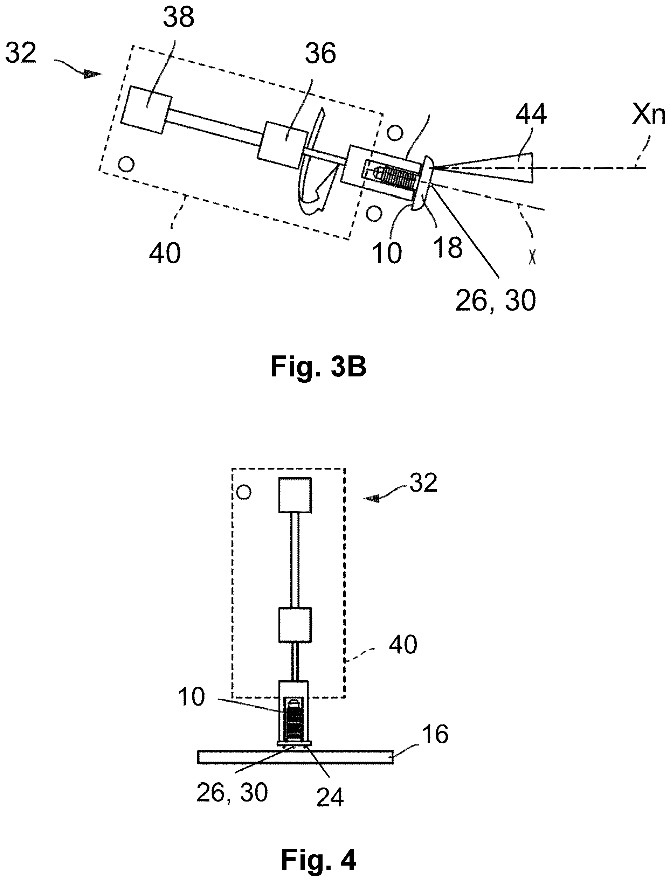

Just before the assembly of the fastening element 10, 10' with the workpiece 16, the permanent adhesive 24, 24' is applied to the first area 20, 20'. The permanent adhesive 24, 24' may be automatically applied, for example with a device 32 (for instance a joining device 32) as depicted in Fig. 3A and Fig. 3B. The device 32 of Fig. 3A, Fig. 3B and Fig. 4 is shown with a fastening element 10 according to the first embodiment. However, a similar device may be used in a similar way, obvious for the person skilled in the art, with a fastening element according to the second embodiment or with any similar fastening element.

The device 32 comprises for instance a collet 34 adapted to receive the fastening section 12 of the fastening element, a linear drive 36 and a rotation module 38 adapted to drive the collet 34 in order to linearly move and rotate the collet 34, and thus actuate the fastener 10 when the fastening section 12 is received in the collet 34.

Fig. 3A shows the device 32 with the collet 34 in a rest position. In order to load the fastening device 10, the collet 34 can for example move forward in the direction of arrow A until the collet 34 extends outside the casing 40 of the device 32. The fastening section 12 can then be inserted inside the collet and maintained in the collet.

A fastener feeder 42 can be provided to feed the fastening element 10. The fastener feeder 42 can have a load pin adapted to contact the flange or contact surface of the fastening element 10. The load pin pushes the flange or contact surface of the fastening element 10 such that the fastening section penetrates the collet 34 until it reaches an end position.

Eventually a rotation of the collet 34 can be made in order to secure the fastening section 12, 12', notably when the fastening section is threaded. The collet 38 with the fastening element can then be moved back into the casing 40 or housing of the device 32, for example, in order to minimize interference with the environment.

The casing 40 can be moved in order to reach a position where the permanent adhesive 24 can be applied to the first area 20 of the fastening element 10. For example, the casing 40 can be rotated and the collet 34 translates up to a position where the contact surface 14 (and more particularly the first area 20 of the contact surface) faces an adhesive dosing outlet 44. For example, a second rotation module R2 may be provided for the rotation of the casing (and the collet) around a second axis.

The permanent adhesive 24 can be applied to contact surface 14 (and more particularly the first area 20 of the contact surface) as depicted in Fig. 3B. The adhesive can be applied by a bonding device comprising the dosing outlet (or nozzle) 44 for applying the adhesive. The contact surface or flange can be eccentrically aligned with the nozzle or the dosing outlet 44 during the step of applying the permanent adhesive 24. Besides, the longitudinal axis X may form an angle between 10deg and 90 deg with regard to the axis of the nozzle Xn. Eventually the bonding device and the fastener feeder 42 can be parts of the same unit.

A rotation of the fastening element 10 around its shaft or the longitudinal axis X during the application of the permanent adhesive 24 allows a better repartition of the permanent adhesive 24. The rotation prevents the permanent adhesive 24 of moving to a single direction or even dripping of the fastening element due to gravity. The rotation also prevents a possible contamination of the joining device 32 with permanent adhesive 24.

Once the permanent adhesive 24 has been applied to the first area 20, the fastening element 10 can be joined to the workpiece 16, as schematically depicted in Fig. 4. For instance, the device 32 moves up to the workpiece 16 and to the area where the fastening element 10 has to be fixed. The device 32 and more particularly the casing 40 with the collet 34 may for instance rotate to align the fastening element and the workpiece 16. The fastening element 10 is aligned such that the longitudinal axis X is sensibly orthogonal to the plane formed by the workpiece 16.

The rotation of the fastening element 10 can eventually continue during the rotation of the casing 40 in order to maintain a good repartition of the adhesive on the first area.

The collet 34 translates up to the workpiece such that the contact surface 14 faces the workpiece and then enters into contact with the workpiece 16. By entering into contact with the workpiece 16 and due to the pushing forces, the fixation wax 26 becomes squeezed so that the anti-tack coating 30 cracks. During cracking, the underlying fixation wax 26 gets into contact with the surface of the workpiece 16 while the permanent adhesive 24 becomes squeezed. The fixation wax 26 immediately holds the fastening element 10 on the workpiece 16, such that the device 32 can release immediately the fastening element 10 and perform its next action with another fastening element 10.

In the state of the fastening element 10 held by the fixation wax 26 securely in the prescribed position on the workpiece 16, the permanent adhesive 24 can then harden without further holding measures, of a mechanical nature for example, being necessary. When the permanent adhesive 24 is completely hardened, it transmits a significantly greater holding action than the fixation wax 26.

Since the crosslinking speed of the permanent adhesive 24,24', due to the use of the fixation wax 26, 26', is irrelevant, slow adhesive systems with a long pot life can be used here for the permanent adhesive.

The fastening element may be, as mentioned above, a stud, a nut, a retainer, a spacer, a cable binder or any kind of fastener comprising at least one fastening section and a contact surface.
fastening element 10, 10'
fastening section 12, 12'
contact surface 14, 14'
longitudinal axis X
workpiece 16
flange 18
first area 20, 20'
second area 22, 22'
permanent adhesive 24, 24'
fixation wax 26, 26'
recess 28, 28'
anti-tack coating 30
device 32
collet 34
linear drive 36
rotation module 38
casing 40
fastener feeder 42
adhesive dosing outlet 44
axis of the nozzle Xn
bonding device
second rotation module R2

## Claims

1. Fastening element (10, 10') for gluing onto a workpiece (16), comprising:
- at least one fastening section (12, 12'), and
- a contact surface (14, 14') , wherein a permanent adhesive (24, 24') is applied to a first area (20) of the contact surface, and the contact surface also comprises a second area (22), different from the first area,
**characterized in that**
a fixation wax (26, 26') is applied on the second area (22), different from the first area and **in that** an anti-tack coating (30) is applied to the fixation wax.

2. Fastening element (10, 10') according to claim 1, wherein the contact surface (14, 4') comprises a recess (28, 28') and the fixation wax (26, 26') is arranged within the recess (28, 28').

3. Fastening element (10') according to claim 2, wherein the recess (28') is an annular recess, and the fixation wax (26, 26') is arranged in the annular recess.

4. Fastening element (10) according to claim 2, wherein the fastening section is a shaft extending along a longitudinal axis, and comprising a flange (18) which extends transversely with respect to the shank, wherein the contact surface is a top surface of the flange which faces away from the shank, and wherein the recess (28) is a circular recess centred on the flange.

5. Fastening element (10, 10') according to any of claims 2 to 4, wherein the volume of the fixation wax (26, 26') is less than the interior volume of the recess (28, 28').

6. Fastening element (10, 10') according to any of the preceding claims, wherein the anti-tack coating (30) is a resin or paint layer.

7. Fastening element (10, 10') according to claim 6, wherein the anti-tack coating extends on the entire contact surface (14, 14').

8. Fastening element (10, 10') according to any of claims 1 to 5, wherein the anti-tack coating is a provided by a plurality of glass beads arranged above the fixation wax.

9. Fastening element (10, 10') according to any of claims 1 to 5, wherein the anti-tack coating is a silicate layer or polymer layer.

10. Fastening element (10, 10') according to any of claims 1 to 9, wherein the permanent adhesive (24, 24') surrounds the fixation wax (26, 26').

11. Method for fastening a fastening element (10, 10') with a workpiece comprising the steps of:
- providing a fastening element (10, 10') according to any of claims 1 to 10
- providing a workpiece (16)
- arranging the contact surface of the fastening element facing the workpiece
- pushing the fastening element against the workpiece such that the anti-tack coating cracks and the fixation wax gets into contact with the surface of the workpiece for preliminarily holding the fastening element on the workpiece, while the permanent adhesive for permanently holding the fastening element on the workpiece becomes squeezed.

12. Method for manufacturing a fastening element (10, 10'), comprising the steps of:
- providing an element having at least one fastening section (12, 12') and a contact surface (14, 14'),
- applying a fixation wax (26, 26') to a second area of the contact surface,
- coating the fixation wax with an anti-tack coating (30),
- applying a permanent adhesive (24, 24') to a first area of the contact surface, the first area being different that the second area.

13. Method according to claim 12, wherein the contact surface comprises at least one recess and the fixation wax (26, 26') is applied within the at least one recess.

14. Method according to claim 12 or claim 13, wherein the permanent adhesive is automatically applied by a device after the application of the fixation wax (26, 26') and the anti-tack coating.
